# EUROPÄISCHE PATENTSCHRIFT

(11) **EP 1 538 032 B1**
(45) Veröffentlichungstag und Bekanntmachung des Hinweises auf die Patenterteilung: **02.04.2008**
(21) Anmeldenummer: 04024120.0
(22) Anmeldetag: 09.10.2004
(51) Int. Cl.: B60R 21/13

(54) **Überrollschutzsystem für Kraftfahrzeuge mit einem ausfahrbaren Überrollkörper**
Roll-over protection system for vehicles with an extendable rollover pillar
Système de protection contre les retournements de véhicules avec une colonne extensible

(30) Priorität: 06.12.2003 DE 10357398
(43) Veröffentlichungstag der Anmeldung: 08.06.2005
(73) Patentinhaber: ISE Innomotive Systems Europe GmbH, 51702 Bergneustadt (DE)
(72) Erfinder: Menne, Hans Gerd, 51702 Bergneustadt (DE); Rosendahl, Gerd, 51702 Bergneustadt (DE)
(74) Vertreter: Fuchs

(56) Entgegenhaltungen:
- DE-A1- 4 116 223
- DE-A1- 10 160 715
- DE-A1- 19 756 192
- DE-C1- 4 241 054

## Beschreibung

Die Erfindung bezieht sich auf ein Überrollschutzsystem für Kraftfahrzeuge, die ein versenkbares Dach und zwei bis zur Dachkante hochgezogene starre B-Säulen aufweisen, mit mindestens einem verfahrbar in einem Führungskörper gehalterten Überrollkörper, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine mittels einer Wiedereinfahrsperre verriegelbare obere, schützende Stellung bringbar ist.

Derartige Überrollschutzsysteme dienen zum Schutz der Insassen in Kraftfahrzeugen ohne schützendes Dach, typischerweise in Cabriolets oder Sportwagen bei einem Überschlag, da das Fahrzeug über den Überrollkörper abrollen wird.

Es ist dabei bekannt, einen die gesamte Fahrzeugbreite überspannenden, fest installierten Überrollbügel vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest installierten Überrollbügel zuzuordnen. Diese Lösung wird typischerweise bei Sportwagen zur Unterstreichung des sportlichen Aussehens eingesetzt.

Weit verbreitet bei Cabriolets sind konstruktive Lösungen, bei denen der Überrollkörper im Normalzustand eingefahren ist, und im Gefahrenfall, also bei einem drohenden Überschlag, schnell in eine schützende Position ausgefahren wird, um zu verhindern, dass die Fahrzeuginsassen durch das sich überschlagende Fahrzeug erdrückt werden.

Von einem derartigen verfahrbaren Überrollkörper geht auch die Erfindung aus.

Diese Überrollschutzsysteme weisen typischerweise einen in einem fahrzeugfesten Führungskörper geführten U-förmigen oder aus einem Profilkörper gebildeten Überrollkörper, auf, wobei der Führungskörper in einem Kassetten-Gehäuse befestigt ist. Dieser Überrollkörper wird im Normalzustand gegen die Vorspannkraft einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in Wirkeingriff tretende Verriegelungseinrichtung, die Wiedereinfahrsperre, ein Eindrücken des Überrollbügels verhindert. Dabei ist typischerweise jedem Fahrzeugsitz eine Kassette zugeordnet, insbesondere bei den Fondsitzen. Alternativ können die Kassetten auch in einer Rückwand-Baueinheit integriert sein.

Eine derartige Kassetten-Konstruktion eines Überrollbügelschutzsystems mit einem U-förmigen Überrollbügel zeigt beispielsweise die DE 43 42 400 A1; eine alternative Kassettenkonstruktion mit einem Überrollkörper in Form eines Profilkörpers zeigt insbesondere die DE 198 38 989 C1.

Die vorgenannte Haltevorrichtung für die ausfahrbaren Überrollkörper besitzt typischerweise ein am Überrollkörper befestigtes Halteglied, das in lösbarer mechanischer Wirkverbindung mit einem Auslöseglied an einem fahrzeugfesten, sensorgesteuerten Auslösesystem, dem Aktuator, steht, der durch einen Auslösemagneten, den sogenannten Crashmagneten, oder durch ein pyrotechnisches Auslöseglied, gebildet ist.

Die als Wiedereinfahrsperre dienende Verriegelungseinrichtung besteht typischerweise aus einer schwenkbar angelenkten, federvorgespannten Rastklinke mit Zahnsegmenten und einer feststehenden Zahnleiste, einem Rastdorn oder dergleichen, wobei ein Verriegelungs-Element mit dem Überrollbügel und das andere fahrzeugfest verbunden ist

Die Unterbringung der fahrzeugsitzbezogenen Kassettensysteme in einem Cabriolet oder ggf. auch in einem Sportwagen mit abnehmbaren Dach, beansprucht einen nicht unerheblichen Bauraum, was besondere konstruktive Maßnahmen notwendig macht. Daher werden typischerweise nur die Fondsitze mit jeweils einer Kassette versehen, während für die vorderen Sitze ein Überrollschutz durch die A-Säulen gegeben ist.

Der Erfindung liegt die Aufgabe zugrunde, das eingangs bezeichnete Überrollschutzsystem für Kraftfahrzeuge mit einem ausfahrbaren Überrollkörper so auszubilden, daß fahrzeugsitzbezogene Kassettensysteme entbehrlich sind und ein maximaler Überlebensraum für alle Passagiere eines offenen PKW gegeben ist.

Die Lösung dieser Aufgabe gelingt bei einem Überrollschutzsystem für Kraftfahrzeuge, die ein versenkbares Dach und zwei bis zur Dachkante hochgezogene starre B-Säulen aufweisen, mit mindestens einem verfahrbar in einem Führungskörper gehalterten Überrollkörper, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine mittels einer Wiedereinfahrsperre verriegelbare obere, schützende Stellung bringbar ist; gemäß der Erfindung dadurch, dass der Überrollkörper mit den zugehörigen Komponenten jeweils im Hohlraum der zugehörigen B-Säule integrierbar ist.

Die beiden B-Säulen eines Cabriolets stellen eine vorteilhafte, fahrzeugfeste Basis für ein ausfahrbares Überrollschutzsystem dar.

Die B-Säule ist heute schon stark ausgelegt und zur Aufnahme von Crashkräften vorgesehen.

Andererseits beinhalten B-Säulen einen Hohlraum, in welchem ein teleskopartiger Überrollschutz in Form eines ausfahrbaren Stützelementes unterzubringen ist.

Die B-Säule hat auch heute schon eine Höhe, die oberhalb der Kopfhöhe der Fahrzeuginsassen liegt. Da sie außerdem im wesentlichen mittig bezogen auf die Fahrzeuglänge angeordnet ist, bietet sie einen maximalen Überlebensraum für alle Passagiere des offenen PKW.

Durch die Integration eines Abstützelementes in der B-Säule ergeben sich folgende positive Effekte:
- Beim Seitencrash wirkt das nicht aufgestellte Abstützelement als zusätzlicher Flankenschutz
- Beim Überschlag des Fahrzeugs stellt das nun aufgestellte und verriegelte Abstützelement einen wirkungsvollen Überrollschutz dar
- Das Abstützelement beansprucht keinen zusätzlichen Bauraum
- Das Abstützelement beeinflusst nicht das Design des Fahrzeuges.

Es ist durch die DE 101 60 715 A1 ein Überrollschutzsystem gemäß dem Oberbegriff der Anspruch 1 bekannt geworden, die Rahmenstrukturen von Fahrgastzellen geschlossener Kraftfahrzeuge, die im Bereich der A-, B- und C-Säulen sowie im Dachrahmenbereich aus Hohlprofilen gebildete Stützen sowie Querstreben aufweisen, die insbesondere aus Gewichtsgründen in den Abmessungen reduziert sind, zum Ausgleich der reduzierten Festigkeit durch im Crash-Fall teleskopartig ausfahrbare Stützeinheiten zu versteifen. Dabei sind zur Abstützung des Mittelbereiches der Rahmenstruktur an oder neben der jeweiligen B-Säule zwei mittlere Stützeinheiten vorgesehen. Diese Schrift gibt jedoch keine Hinweise auf die Unterbringung von Überrollschutzsystemen bei offenen PKW.

Die DE 42 41 054 C1 zeigt ein Fahrzeug mit einer die Fahrgastzelle oberhalb einer Gürtellinie umgebenden Rahmenstruktur mit geschlossenem Dach, bei der die B-Säule in Höhe der Gürtellinie geteilt ist, wobei der obere Teil in den unteren Teil versenkbar ist und aus ihm in eine obere, mit dem Dachrahmenbereich und dem unteren Teil der B-Säule verriegelte Wirkstellung ausfahrbar ist. Bei abgesenkter B-Säule sind dadurch in angestrebter Weise die Sichtverhältnisse der Fahrzeuginsassen nicht beeinträchtigt, wogegen bei ausgefahrener Mittelsäule die Festigkeit des Dachbereiches des Fahrzeugaufbaues gewährleistet ist.

Auch diese Schrift gibt keine Hinweise auf die Unterbringung eines Überrollschutzsystems bei offenem PKW. Darüber hinaus bereitet die geteilte B-Säule erhebliche Probleme für die Anbringung der Sitzgurte für die Vordersitze, die typischerweise im oberen Bereich der B-Säule angeschlagen sind.

Ausgestaltungen der Erfindung sind in Unteransprüchen gekennzeichnet sowie ergeben sich aus der nachfolgenden Figurenbeschreibung.

Anhand eines in den Zeichnungen beschriebenen Ausführungsbeispiels wird die Erfindung näher beschrieben.

Es zeigen:
- Fig. 1: in einer stark schematisierten, teilweise auf Höhe der B-Säule geschnittenen Frontansicht eines PKW die Integration eines Überrollschutzsystems in einer B-Säule des PKW mit versenkbarem Dach, und

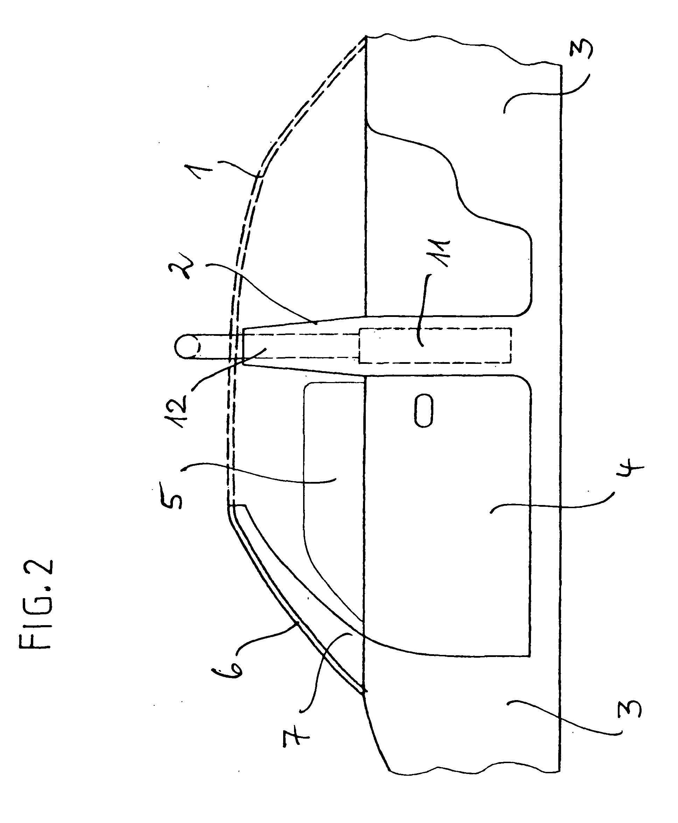

- Fig. 2: eine Seitenansicht des PKW nach Fig. 1 mit in der B-Säule integriertem Überrollschutzsystem.

Die Figuren zeigen einen PKW mit versenkbarem Dach 1, einer bis auf Höhe der Dachkante hochgezogenem starren B-Säule 2 im Mittelteil der Karosserie 3, einer Vordertür 4 mit versenkbarer Scheibe 5, einer frontseitigen Windschutzscheibe 6 mit A-Säule 7, einem Bodenteil 8 der Karosserie und einem Vordersitz 9 mit Kopfstütze 10.

Diese Fahrzeugkomponenten sind hinlänglich bekannt und brauchen daher hier nicht näher dargestellt werden, zumal die Erfindung von der konkreten Ausführung dieser Komponenten unabhängig ist. Im Hohlraum der B-Säule 2 ist ein länglicher Führungskörper 11 fahrzeugfest angebracht, in welchem ein rohr- oder stangenartiges Stützelement 12 aufstellbar gehaltert ist. Dieser Führungskörper umschließt auch den zur Aufstellung benötigten Federspeicher sowie die entsprechende Haltevorrichtung zum Niederhalten des Stützelementes gegen die Federkraft im Grundzustand einschließlich des sensorgesteuerten Auslösesystems zum Lösen der Haltevorrichtung. Ferner ist in der B-Säule die Wiedereinfahrsperre integriert, d.h. die Verriegelung, die ein ungewolltes Zurückschieben des aufgestellten Stützelementes verhindert. Diese Verriegelung ist mit bekannten Mitteln zum Zweck der Reversierung eines ungewollt aufgestellten Stützelementes manuell aufhebbar ausgebildet.

Das aufstellbare Stützelement 12 kann - analog den bekannten Überrollbügeln - ein- oder mehrstufig, d.h. teleskopartig, ausgebildet sein. Es kann gradlinig oder, wie dargestellt, auf einer leichten Kurvenbahn verlaufen, wobei dann das Stützelement entsprechend leicht gebogen ist.

Integriert in der B-Säule 2 ist auch eine symbolisch angedeutete Steuerstufe 13 für das Auslösen der Aufstellbewegung des Stützelementes. Sie erhält Signale von einem Sensor, der einen drohenden Überschlag anzeigt. Auch kann die Steuerung so ausgelegt sein, daß das System durch einen im Fahrzeug vorhandenen Sensor, z.B. einem Airbagsensor, aktivierbar ist.

Da die B-Säule 2 bis an die Dachkante heranreicht und das Stützelement im aufgestellten Zustand, wie dargestellt, über die Dachkante hinausragt, ist die Steuerung 13 zweckmäßig so ausgelegt, daß das System bei geschlossenem Dach nicht aktiviert wird.

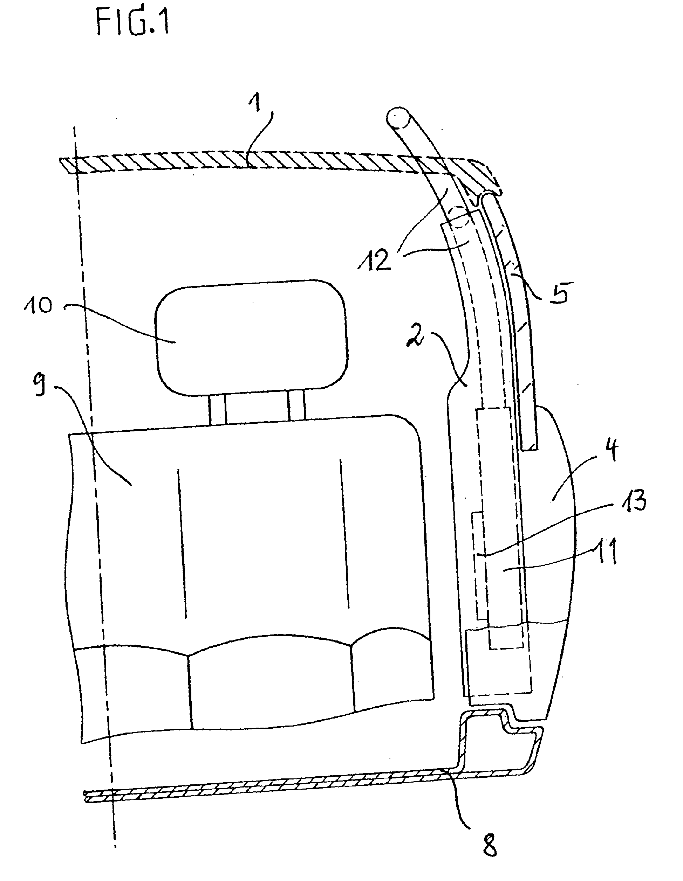

In Fig. 1 ist nur die eine Hälfte eines Cabriolets dargestellt. Es versteht sich, daß auch die andere B-Säule in gleicher Weise ausgebildet ist.

Das Stützelement 12 ist mit allen zugehörigen Komponenten im Hohlraum der B-Säule integriert.

## Patentansprüche

1. Überrollschutzsystem für Kraftfahrzeuge, die ein versenkbares Dach (1) und zwei bis zur Dachkante hochgezogene starre B-Säulen (2) aufweisen, mit mindestens einem verfahrbar in einem Führungskörper (11) gehalterten Überrollkörper (12), der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine mittels einer Wiedereinfahrsperre verriegelbare obere, schützende Stellung bringbar ist, **dadurch gekennzeichnet, dass** der Überrollkörper (12) mit den zugehörigen Komponenten jeweils im Hohlraum der zugehörigen B-Säule (2) integrierbar ist.

2. Überrollschutzsystem nach Anspruch 1, **dadurch gekennzeichnet, dass** der Überrollkörper als längliches, rohr- oder stangenartiges Stützelement (12) ausgebildet ist.

3. Überrollschutzsystem nach Anspruch 2, **dadurch gekennzeichnet, dass** das Stützelement (12) einstufig ausgebildet ist.

4. Überrollschutzsystem nach Anspruch 2, **dadurch gekennzeichnet, dass** das Stützelement mehrstufig ausgebildet ist.

5. Überrollschutzsystem nach einem der Ansprüche 1 bis 4, **dadurch gekennzeichnet, dass** das Stützelement gradlinig in Verbindung mit einer linearen Aufstellbahn ausgebildet ist.

6. Überrollschutzsystem nach einem der Ansprüche 1 bis 4, **dadurch gekennzeichnet, dass** das Stützelement (12) nach dem Fahrzeuginnenraum hin gebogen in Verbindung mit einer entsprechenden Aufstellbahn ausgebildet ist.

7. Überrollschutzsystem nach einem der Ansprüche 1 bis 6, **dadurch gekennzeichnet, dass** eine Steuerstufe (13) für die Aktivierung der Aufstellbewegung des Überrollkörpers (12) vorgesehen ist, die so ausgelegt ist, dass eine Aktivierung bei geschlossenem Dach nicht erfolgt.

## Claims

1. Rollover protection system for motor vehicles that have a retractable roof (1) and two rigid B-pillars (2) extending up to the roof edge, having at least one rollover member (12) mounted movably in a guide member (11), which rollover member in the normal state is retainable by a holding device in a lower, retracted position of rest against the force of at least one pre-tensioned driving compression spring, and on release of the holding device is able to be brought by the spring force of the driving compression spring into an upper, protective position lockable by means of a retraction blocking mechanism, **characterised in that** the rollover member (12) is able to be integrated with the associated components in each case in the cavity of the associated B-pillar (2).

2. Rollover protection system according to Claim 1, **characterised in that** the rollover member is in the form of an elongate tube-like or post-like supporting element (12).

3. Rollover protection system according to Claim 2, **characterised in that** the supporting element (12) is of single-stage construction.

4. Rollover protection system according to Claim 2, **characterised in that** the supporting element is of multi-stage construction.

5. Rollover protection system according to any one of Claims 1 to 4, **characterised in that** the supporting element is of straight construction with a linear deployment path.

6. Rollover protection system according to any one of Claims 1 to 4, **characterised in that** the supporting element (12) is curved towards the vehicle interior in conjunction with a corresponding deployment path.

7. Rollover protection system according to any one of Claims 1 to 6, **characterised in that** a control stage (13) to activate the deployment movement of the rollover member (12) is provided, which is designed so that activation does not take place when the roof is closed.

## Revendications

1. Système de protection contre le retournement pour véhicules automobiles qui présentent un toit (1) escamotable et deux montants de baie (2) rigides relevés jusqu'à l'arête du toit, avec au moins un arceau de sécurité (12) maintenu de manière à pouvoir se déplacer dans un corps de guidage (11), qui peut être maintenu à l'état normal contre la force d'au moins un ressort de pression de commande précontraint par un dispositif de retenue dans une position de repos inférieure, rétractée, et peut être amené dans une position de protection supérieure, verrouillable au moyen d'un verrouillage de rentrée, en détachant le dispositif de retenue par la force élastique du ressort de pression de commande, **caractérisé en ce que** l'arceau de sécurité (12) avec les composants afférents peut être intégré respectivement dans une cavité du montant de baie (2) afférent.

2. Système de protection anticapotage selon la revendication 1, **caractérisé en ce que** l'arceau de sécurité est réalisé comme un élément d'appui (12) oblong, tubulaire ou en forme de barre.

3. Système de protection anticapotage selon la revendication 2, **caractérisé en ce que** l'élément d'appui (12) est réalisé de manière monoétagée.

4. Système de protection anticapotage selon la revendication 2, **caractérisé en ce que** l'élément d'appui est réalisé de manière étagée.

5. Système de protection anticapotage selon l'une quelconque des revendications 1 à 4, **caractérisé en ce que** l'élément d'appui est réalisé de manière rectiligne en liaison avec une trajectoire de montage linéaire.

6. Système de protection anticapotage selon l'une quelconque des revendications 1 à 4, **caractérisé en ce que** l'élément d'appui (12) est réalisé courbé vers l'habitacle du véhicule en liaison avec une voie trajectoire de montage correspondante.

7. Système de protection anticapotage selon l'une quelconque des revendications 1 à 6, **caractérisé en ce qu'**un temporisateur (13) est prévu pour l'activation du mouvement d'installation de l'arceau de sécurité (12) qui est conçu de telle sorte qu'une activation ne soit pas effectuée lorsque le toit est fermé.
